# EUROPEAN PATENT APPLICATION

(11) **EP 2 169 999 A2**
(43) Date of publication of application: **31.03.2010**
(21) Application number: 09171502.9
(22) Date of filing: 28.09.2009
(51) Int. Cl.: H04W 36/22

(54) **Method and system for congestion control in eHSPA**

(30) Priority: 30.09.2008 ES 200802772
(71) Applicant: Vodafone Group PLC, Newbury Berkshire RG14 2FB (GB); Vodafone España, S.A., 28108 Alcobendas (ES)
(72) Inventor: Garriga Muñiz, Beatriz, 28050 Castellana Norte (ES); Dominguez Romeo, Francisco, 28050 Castellana Norte (ES); De Pasquale, andrea, 28050 Castellana Norte (ES)
(74) Representative: Keston, David Arthur

(57) **Abstract**

The invention refers to a method for congestion control of IuR resources in an eHSPA or flat architecture mobile communications network in a situation of soft handover, the network having a transport network, in which:
- a User Equipment (10) sends uplink data packets to a serving eNode B (20) and to a number of non-serving eNode Bs (20'),
- from each non-serving eNode B's said uplink data packets are decoded and transmitted in uplink through the transport network (30) over an IuR interface, and then transmitted together with the downlink data to the serving eNode (20);

wherein the method comprises:
- detecting, by the serving eNode B, whether there is congestion in any of the IuR interfaces and where the congestion is located;
- sending a congestion notification to one or more of the non-serving eNode B's (20'), depending on which IuR interface/s the congestion as been detected;
- stop decoding the uplink user plane data packets in one or more of the non-serving eNode B's, maintaining active the decoding of the E-DPCCH.

The invention is also related to a network entity comprising means for carrying out the above method.

## Description

### Field of the invention

The present invention lies within the telecommunications field and, especially, in wireless communications networks including the second generation (2G) and the third generation (3G) networks (i.e., supporting GSM and WCDMA technologies, respectively).

### Background of the invention

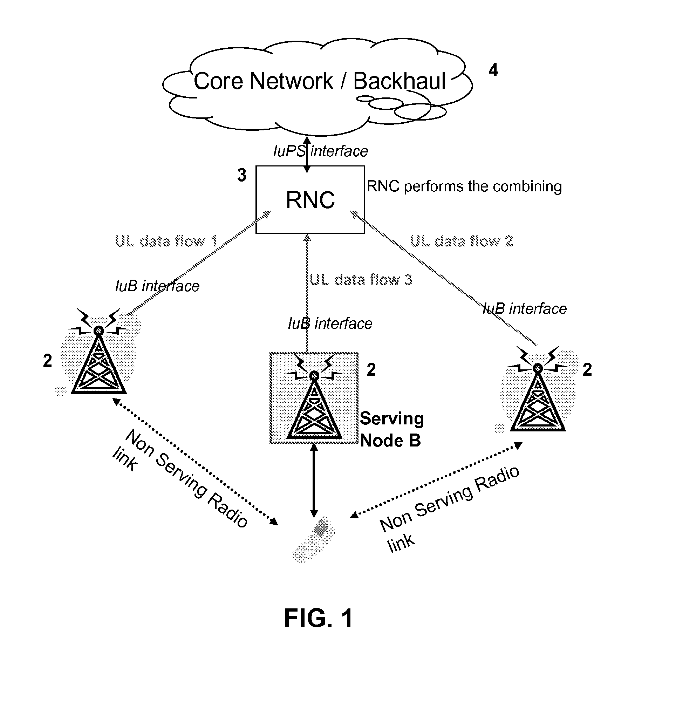

As shown in figure 1, in Classical 3G architecture (Release 99), Node B's 2 are connected to a Radio Network Controller (RNC) 3 via an luB interface; the RNC routes the data traffic towards the Core Network 4 via an luPS interface, and from there data packets are delivered towards the internet world.

The luB and luPS interfaces are logical interfaces mapped into a complex transport network made of point to point links and routers.

In the perspective of Uplink PS services, the RNC main function is to route the PS data traffic to the Core network, as well as to control and implement functions such as the Soft Handover (SHO) that has the aim to improve the radio performances of the WCDMA system. Soft Handover takes place when a user equipment (UE) 1 is simultaneously connected to two or more Node B's.

In Soft Handover, user data from different Node B's 2 (UL data flow 1, UL data flow 2, UL data flow 3) are combined into the serving RNC in order to originate a unique data flow; this process is also called Macrodiversity combining. When the Nodes involved in SHO belong to different RNCs, a single RNC is connected to the Core Network, and called Serving RNC, whilst any other RNC involved are called drift RNCs (or non-serving RNCs) and connected to the serving RNC via an interface called luR.

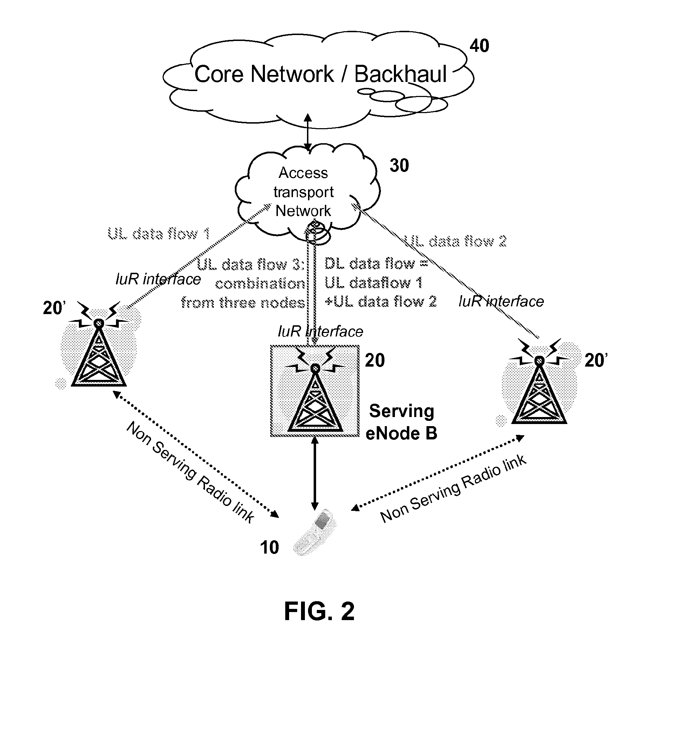

An alternative architecture has been developed by the 3GPP with the aim to reduce the need to develop more and bigger RNC machines as data usage in the market grows with the introduction of HSDPA (High-Speed Downlink Packet Access) and HSUPA (High-Speed Uplink Packet Access) services. This is called Flat or Collapsed Architecture (shown in figure 2).

In this flat architecture, many RNC functions are directly collapsed into the Node B (called eNode B = Enhanced Node B). eNodeBs (that can now be seen as small RNCs) are connected to one another, via luR interfaces, and the Soft Handover function can be carried out exchanging data across the luR as in the classical architecture.

One challenge of this flat architecture is the implementation of the Soft Handover at transport level.

In HSDPA (High-Speed Downlink Packet Access) there is power control, and data packets are only sent from one of the Node B's, so there is no Soft Handover for the User plane, i.e. the data towards a user is only sent via one cell. But in HSUPA (High-Speed Uplink Packet Access) data packets are sent from all the Node B's, so Soft Handover is performed as it was in Release 99. The problem is that HSUPA provides very high bit rate (up to 5.7 Mbps in Release 6 of 3GPP) which means that with a few users, the amount of data to be transported (via luB in classical architecture, and via luR in Flat Architecture) can be extremely high.

When Soft Handover is used in the uplink (see Flat Architecture case in Figure 2), the user equipment UE 10 data has to be carried to both the serving eNode B 20 and the non-serving (drift) eNode B's 20'. In general, data from the UE go to the serving eNode B and to a number X of non-serving eNode B's.

When Soft Handover in flat architecture is used, the UE data go from the non-serving eNode B's to the serving eNode B through the transport network (via routers that interconnect all the nodes) to realize the macro-diversity combining and then from the serving eNode B to the Core Network. That means that every non-serving eNode B carries the UE data traffic once in uplink (UL data flow 1, UL data flow 2), and the serving eNode B carries in the transport interface, for the same UE uplink data, X times the same data in downlink (UL data flow 1, UL data flow 2) and once in uplink (UL data flow 3, which is a combination of the X non-serving Node B's and the serving Node B). Therefore, the UE uplink data have to be carried over the transport 2X+1 times in the access network (X being the number of non-serving eNode B's), affecting downlink and uplink transport capacity.

If SHO is used with HSUPA (also called E-DCH=Enhanced Dedicated Channel Uplink), a significant volume of data is involved, and the duplication of the data created by the flat architecture can create a congestion that would not happen with the Classical Architecture.

To avoid this congestion in the access network, static solutions have been proposed, i.e. to enable the possibility of avoiding the usage of the soft handover for the user plane for certain high data rate services or certain Quality of Services users or applications. This is not however efficient because in case of non-congested access network, soft handover provides better user throughput and better radio interface capacity.

US patent application US 2008/0293235 discloses a congestion control method for a wireless communication system. The method described in this document intends to cope with the congestion reducing the soft handover by acting in the window size search of the neighbours. It intends to solve a radio interface congestion, not a congestion problem in the transport plane. Furthermore, the method disclosed avoids the soft handover with a parameters change and it is not related to the flat architecture.

### Summary of the invention

The invention refers to a method for congestion control in an eHSPA or flat architecture mobile communications network in situation of soft handover according to claim 1, and to a network entity of a flat architecture mobile communications network according to claim 9. Preferred embodiments of the method and network entity are defined in the dependent claims.

The drawbacks described in the previous section can be largely mitigated according to the present invention, by means of an method that dynamically checks the congestion situation and takes actions in the Soft Handover process.

According to the method of the present invention, user plane Soft Handover is always active, power control handling typical of Soft Handover is maintained as well, i.e. decoding of E-DPCCH (Enhanced Dedicated Physical Control Channel) is maintained, but the decoding of the user plane data (E-DPDCH Enhaced Dedicated Physical Data Channel) in the non-serving eNB is stopped in case of congestion problems in the transport part (i.e. in the luR part).

As a consequence, the occupation in the access transport network is reduced; when the congestion situation does not exist, then the decoding of the data is resumed.

The present invention relates to a method for congestion control of luR resources in an eHSPA or flat architecture mobile communications network in a situation of soft handover, the network having a transport network, in which:
- a User Equipment UE sends uplink data packets to a serving eNode B and to a number of non-serving eNode Bs,
- from each non-serving eNode B's said uplink data packets are decoded and transmitted in uplink through the transport network over an luR interface, and then transmitted together with the downlink data to the serving eNode.

According to a first aspect of the invention, the method comprises at the serving eNode B:
- detecting whether there is congestion in any of the luR interfaces and where the congestion is located;
- sending a congestion notification to one or more of the non-serving eNode B's, depending on which luR interface or interfaces the congestion as been detected;
- stopping the decoding of the uplink user plane data packets in one or more of the non-serving eNode B's, maintaining active the decoding of the E-DPCCH or enhanced Dedicated Physical Data Channel.

Preferably, the method further comprises resuming the user plane decoding when the congestion over said luR interfaces is over.

According to a preferred embodiment of the invention, the step of sending a congestion notification comprises :
if congestion is detected in the user equipment data packets coming from all non-serving eNode B's, senda first congestion notification to all non-serving eNode B's, which stop decoding user equipment data packets whose traffic is handled by the eNode B quoted as serving eNode B in the first congestion notification
   The step of sending a congestion notification may also comprise:
   - if congestion is detected in only in the user equipment data packets coming from one or more non-serving eNode B's, but not in all of them, sending a second congestion notification to said non-serving eNode B's, which stop decoding user equipment data packets whose traffic is handled by the eNode B quoted as serving eNode B in the second congestion notification.

Stopping of decoding of said uplink data packets can be carried out for all user equipments at the same time. Or it can be carried out for user equipments with low priority traffic, and if congestion persists, stop decoding data of the next priority users.

Congestion may be detected by lost or delayed frames in the data packets.

The congestion notification preferably has the format indicated in 3GPP 25.423 and 25.425.

A second aspect of the present invention refers to a network entity of a flat architecture mobile communications network in a situation of soft handover, which comprises:
- a detector for detecting whether there is congestion in any of the luR interfaces of the transport network, and for detecting where the congestion is located;
- a notifier for sending a congestion notification to one or more of a plurality of non-serving eNode B's, depending on which luR interface or interfaces the congestion as been detected; and
- a processor configured to stop the decoding of the uplink user plane data packets in one or more of the non-serving eNode B's, and configured to maintain active the decoding of the enhanced Dedicated Physical Data Channel, E-DPCCH.

The processor is preferably further configured to resume the user plane decoding when the congestion over said luR interfaces is over.

In response to detecting congestion in the user equipment data packets coming from all non-serving eNode B's, the notifier may be configured to send a first congestion notification to all non-serving eNode B's, which stop decoding user equipment data packets whose traffic is handled by the eNode B quoted as serving eNode B in the first congestion notification.

Also in response to detecting congestion only in the user equipment data packets coming from one or more non-serving eNode B's, but not in all of them, the notifier may be configured to send a second congestion notification to said non-serving eNode B's, which stop decoding user equipment data packets whose traffic is handled by the eNode B quoted as serving eNode B in the second congestion notification.

Stopping of decoding of said uplink data packets can be carried out for all user equipments at the same time. Or stopping the decoding of said uplink data packets can be carried out for user equipments with low priority traffic, and if congestion persists, stop decoding data of the next priority users.

Congestion is preferably detected by lost or delayed frames in the data packets.

It is also an aim of the present invention to provide a network entity of a flat architecture mobile communications network comprising means for carrying out the above-mentioned method.

In the context of the present invention, the term "network entity" is intended to mean any base station, node B, eNode B or the like, which comprises at least one sector, having a user equipment connected thereto in a situation of soft handover.

The advantages of the proposed invention will become apparent in the description that follows.

### Brief description of the drawings

To complete the description and in order to provide for a better understanding of the invention, a set of drawings is provided. The drawings form an integral part of the description and illustrate the preferred embodiments of the invention, which should not be interpreted as restricting the scope of the invention, but just as examples of how the invention can be embodied. The drawings comprise the following figures:
Figure 1 shows the classical architecture.
Figure 2 shows the flat architecture, and the flow of data in such architecture in a situation of soft handover.
Figure 3 shows a flowchart of the method of the invention.

### Detailed description of the preferred embodiments

Reference will now be made in detail to a preferred embodiment of the method of the present invention, which dynamically checks whether there is congestion in a situation of Soft Handover, and depending on where the congestion is detected it takes the corresponding actions in such Soft Handover process.

The Soft Handover user plane is always active, and so is the power control handling typical of soft handover, but according to the invention, decoding of the user equipment data in one or more of the non-serving eNode B's is stopped in case of congestion problems; as a consequence, the occupation in the access transport network is reduced.

When the congestion situation does no longer exist, decoding of the data is resumed.

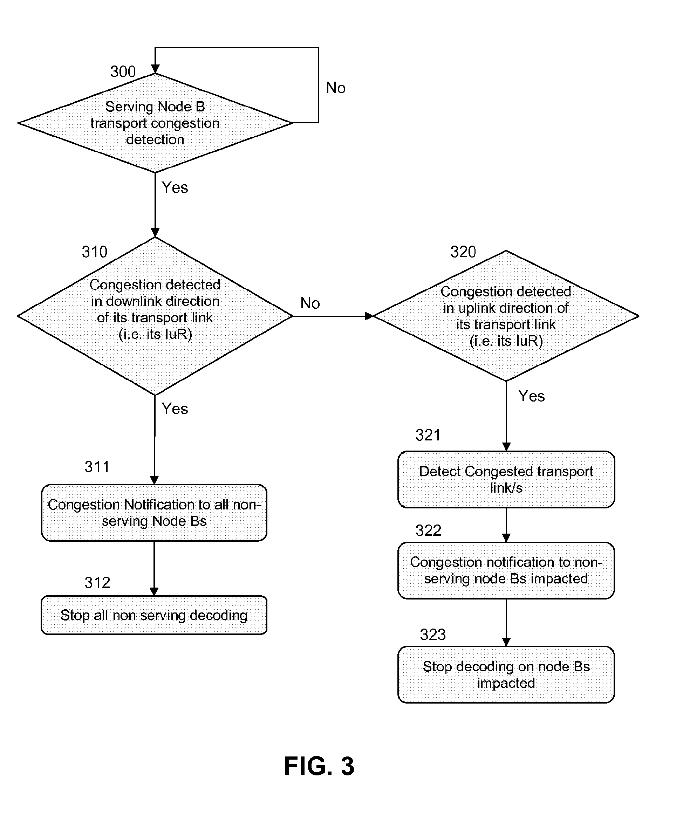

As shown in figure 3, when there is congestion, the serving eNode B can detect lost frames or delayed frames at transport level in the downlink direction of its transport link (i.e. its luR). So congestion is detected (step 300).

When sending the UE data packets, each non-serving eNode B inserts a sequence number and a timestamp. When the data packets arrive at the serving eNode B, the latter checks the sequence number, and if there is a missing sequence number, then there has been a packet lost. It also checks the time that the UE data packet has taken to arrive, so it can also detect when there is a packet delay.

Depending on the amount of transport links that are congested, there are two possible cases:
* Congestion Case 1: congestion is detected in the UE data coming from all non-serving eNode B's. This implies that the congestion is likely be in the downlink path of the serving eNode B, between the transport network 30 (see figure 1B) and the serving eNode B 20.
* Congestion Case 2: congestion is only detected in the UE data from one or more specific non-serving eNB, but not in all of them. That means the congestion is happening in the Uplink of these specific non-serving eNB(s). (e.g. between the non-serving eNB and the transport access network of the figure 1).

So a congestion check is carried out to determine whether there is congestion of the type 'Congestion Case 1' (step 310). If it is detected that there is congestion in the downlink direction of the transport link of the serving eNode B, serving eNode B 20 sends a congestion notification to all the non-serving eNode B's (step 311). Upon receipt of the notification, the involved eNode Bs stop decoding the E-DPDCH (enhanced Dedicated Physical Data Channel) of the user equipments whose traffic is handled by the eNode B quoted as serving eNode B in the congestion notification received (step 312).

If the result from congestion decision 310 is negative, a congestion check is carried out to determine whether there is congestion of the type 'Congestion Case 2' (step 320). If it is detected that there is congestion in the uplink direction of the transport link of the serving eNode B it is then detected which are the transport links congested (step 321). The serving eNode B then sends a congestion notification only to the non-serving eNode B's for which congestion was identified in its flow (step 322). These non-serving eNode B's stop the decoding the E-DPDCH of the user equipments whose traffic is handled by the eNode B quoted as serving eNode B in the congestion notification received (step 323).

The format used for the congestion notification is that of the messages indicated in 3GPP standards of the lur (RNS Application Part), references 25.423 and 25.425. The indication of congestion is reported in the "Congestion Status" information element.

The Congestion Status Bits are used by the DRNC (Drift Radio Network Controller) to indicate a congestion status received. The DRNC provides the congestion status in HS-DSCH Capacity Allocation (Type 1 or Type 2) Control Frame when it has been received towards the serving RNC.
Field length: 2 bits. Value range:
0 No TNL Congestion
1 Reserved for future use
2 TNL Congestion - detected by delay build-up
3 TNL Congestion - detected by frame loss

When a non-serving eNode B receives a congestion notification, it stops decoding the data of the non-serving Soft Handover users, and it ceases transmission to the eNode B that notified the congestion. There are two possibilities:
- stop the decoding data of all the users at the same time;
- stop decoding data of users with low priority traffic, and if congestion persists, stop decoding data of the next priority users.

When the serving eNode B detects that there is no longer congestion, it sends the corresponding 'no congestion' notification, then the non-serving eNode B's can resume the decoding again, preferably user by user to avoid hysteresis.

Again, the format of the messages is indicated in 25.423 and 25.425. When the value is 0, there is no TNL Congestion, and then each non-serving eNode B resumes the decoding of the traffic in the uplink and sending user data packets to the serving eNode B.

In this case the resuming of the decoding starts with the high priority users every T seconds to avoid hysteresis. If no congestion indication is received, then it resumes the decoding of the following user-according to traffic priority- , and so on.

The invention is obviously not limited to the specific embodiments described herein, but also encompasses any variations that may be considered by any person skilled in the art (for example, as regards the choice of components, configuration, etc.), within the general scope of the invention as defined in the appended claims.

## Claims

1. Method for congestion control of luR resources in a flat architecture mobile communications network in a situation of soft handover, the network having a transport network, in which:
- a User Equipment (10) sends uplink data packets to a serving eNode B (20) and to a number of non-serving eNode Bs (20'),
- from each non-serving eNode B's said uplink data packets are decoded and transmitted in uplink through the transport network (30) over an luR interface, and then transmitted together with the downlink data to the serving eNode (20);
wherein the method comprises at the serving eNode B:
- detecting whether there is congestion in any of the luR interfaces and where the congestion is located;
- sending a congestion notification to one or more of the non-serving eNode B's (20'), depending on which luR interface or interfaces the congestion as been detected;
- stopping the decoding of the uplink user plane data packets in one or more of the non-serving eNode B's,
- maintaining active the decoding of the enhanced Dedicated Physical Data Channel, E-DPCCH.

2. Method according to claim 1, which further comprises resuming the user plane decoding when the congestion over said luR interfaces is over.

3. Method according to any of claims 1-2, wherein the step of sending a congestion notification comprises:
if congestion is detected in the user equipment data packets coming from all non-serving eNode B's, sending a first congestion notification to all non-serving eNode B's, which stop decoding user equipment data packets whose traffic is handled by the eNode B quoted as serving eNode B in the first congestion notification.

4. Method according to any of claims 1-3, wherein the step of sending a congestion notification comprises:
if congestion is detected only in the user equipment data packets coming from one or more non-serving eNode B's, but not in all of them, sending a second congestion notification to said non-serving eNode B's, which stop decoding user equipment data packets whose traffic is handled by the eNode B quoted as serving eNode B in the second congestion notification.

5. Method according to any previous claim, wherein stopping of decoding of said uplink data packets is carried out for all user equipments at the same time.

6. Method according to any of claims 1-4, wherein stopping the decoding of said uplink data packets is carried out for user equipments with low priority traffic, and if congestion persists, stop decoding data of the next priority users.

7. Method according to any previous claim, wherein congestion is detected by lost or delayed frames in the data packets.

8. Method according to any previous claim, wherein the congestion notification has a format indicated in 3GPP 25.423 and 25.425.

9. A network entity of a flat architecture mobile communications network in a situation of soft handover, which comprises:
- a detector for detecting whether there is congestion in any of the luR interfaces of the transport network, and for detecting where the congestion is located;
- a notifier for sending a congestion notification to one or more of a plurality of non-serving eNode B's (20'), depending on which luR interface or interfaces the congestion as been detected; and
- a processor configured to stop the decoding of the uplink user plane data packets in one or more of the non-serving eNode B's, and configured to maintain active the decoding of the enhanced Dedicated Physical Data Channel, E-DPCCH.

10. Network entity according to claim 9, wherein the processor is further configured to resume the user plane decoding when the congestion over said luR interfaces is over.

11. Network entity according to any of claims 9-10, wherein in response to detecting congestion in the user equipment data packets coming from all non-serving eNode B's, the notifier is configured to send a first congestion notification to all non-serving eNode B's, which stop decoding user equipment data packets whose traffic is handled by the eNode B quoted as serving eNode B in the first congestion notification.

12. Network entity according to any of claims 9-10, wherein in response to detecting congestion only in the user equipment data packets coming from one or more non-serving eNode B's, but not in all of them, the notifier is configured to send a second congestion notification to said non-serving eNode B's, which stop decoding user equipment data packets whose traffic is handled by the eNode B quoted as serving eNode B in the second congestion notification.

13. Network entity according to any of claims 9-12, wherein stopping of decoding of said uplink data packets is carried out for all user equipments at the same time.

14. Network entity according to any of claims 9-12, wherein stopping the decoding of said uplink data packets is carried out for user equipments with low priority traffic, and if congestion persists, stop decoding data of the next priority users.

15. Network entity according to any of claims 9-14, wherein congestion is detected by lost or delayed frames in the data packets.
